# FASCICULE DE BREVET EUROPEEN

(11) **EP 1 494 856 B1**
(45) Date de publication et mention de la délivrance du brevet: **27.05.2009**
(21) Numéro de dépôt: 03747134.9
(22) Date de dépôt: 02.04.2003
(51) Int. Cl.: B32B 21/08

(54) **CARRELET COMPOSITE A BASE DE BOIS USINABLE ET SON PROCEDE DE FABRICATION**
AUF MASCHINELL BEARBEITBAREM HOLZ BASIERENDES VERBUNDHOLZPROFIL UND HERSTELLUNGSVERFAHREN DAFÜR
COMPOSITE WOODEN SECTION BASED ON MACHINABLE WOOD AND METHOD FOR MAKING SAME

(30) Priorité: 04.04.2002 FR 0204183; 01.07.2002 FR 0208183
(43) Date de publication de la demande: 12.01.2005
(73) Titulaire: Geod SA, 2001 Neuchatel (CH)
(72) Inventeur: PRIEUR, Gérard, F-88210 Saulcy (FR); PRIEUR, Dominique, F-88210 La Petite Raon (FR)
(74) Mandataire: Poupon, Michel
(86) Numéro de dépôt international: PCT/FR2003/001018
(87) Numéro de publication internationale: WO 2003/091017

(56) Documents cités:
- EP-A- 0 130 072
- EP-A- 1 044 802
- FR-A- 2 521 484
- GB-A- 2 216 580
- US-A- 5 439 749

## Description

L'invention concerne un carrelet composite à base de bois et tout produit de menuiserie fabriqué à partir d'un tel carrelet, ainsi qu'un procédé de fabrication dudit carrelet.

Le problème à résoudre concerne les menuiseries extérieures en bois et vise à résoudre les problèmes de dégradations et déformations résultant de l'humidité et des conditions d'ambiance,

Il est déjà connu, par exemple dans le document FR 2 521 484 de protéger un profilé en bois en le recouvrant par une feuille de protection en matériau plastique qui n'est pas considérée comme un pli en raison de son extrême finesse.

C'est généralement une feuille d'une épaisseur inférieure à 0.1 mm voire à 0.01 mm.

Par ailleurs on sait réaliser des profilés mixtes par collage après usinage d'un profilé bois sur un profilé plastique.

Par ailleurs le principe de fabrication de carrelets composites à plusieurs plis est connu en soi mais il n'est pas connu que l'un des plis soit en polyéthylène ou en stratifié à base de duromère laminé à haute pression.

L'idée inventive a consisté à aller à l'encontre des habitudes du métier et à chercher s'il était possible de réaliser un matériau à base de bois et de matériau plastique qui soit usinable directement avec des outils classiques à bois, et qui combine les avantages des deux matériaux.

La demanderesse a trouvé une solution à ce problème en concevant un carrelet à plusieurs plis combinant les avantages des plis bois à ceux des plis en stratifié à base de duromère laminé à haute pression.

La mise au point du procédé de fabrication d'un carrelet selon l'invention a nécessité de solutionner divers problèmes pour obtenir un produit final fiable et usinable, et les enseignements des documents D₁-US 5,439,749 et D₂-EP 0 130 072 n'apportent pas de solution à ce problème.

Le document D₁ concerne une structure composite dont les plis externes sont en matériaux identiques avec une mince couche imperméable du type de celle mentionné plus haut et qui ne constitue pas en soi un pli structurel, un usinage et une application à des menuiseries d'extérieurs ne sont pas envisagés.

Le document D₂ concerne un parement de décoration à fixer sur un châssis ou des montants, ceux-ci apportant à l'ensemble une rigidité mécanique, cependant une utilisation en menuiserie d'extérieur n'est pas prévue.

Selon l'invention, le procédé d'obtention d'un carrelet multiplis composite utilisable en menuiserie, en particulier mais non limitativement pour la réalisation de menuiseries d'extérieur, composé d'au moins un pli extérieur en matériau stratifié à base de duromère laminé à haute pression, les autres plis étant des plis en essence de bois naturel, caractérisé en ce qu'on porte avant leur collage entre eux les plis de bois à une hygrométrie de 8 %, puis on les colle entre eux.

En outre l'accouplement de l'autre matériau sur l'une des faces de l'ensemble de lames en bois peut être réalisé par collage ou réalisé par un dispositif en queue d'aronde obtenu par usinage d'une face de la lame de l'autre matériau pour la partie femelle et par usinage d'une face de l'ensemble bois pour la partie mâle.

Le carrelet ainsi obtenu se caractérise en ce qu'il est composé d'au moins un pli extérieur en matériau stratifié à base de duromère laminé à haute pression, les autres plis étant des plis en essence de bois naturel.

Selon une variante, ledit carrelet comporte une couche de colle pour l'accouplement entre le bois et l'autre matériau par exemple une colle polyuréthane mono composante.

Selon une autre variante, ledit carrelet comporte un moyen d'accouplement en queue d'aronde entre le bois et l'autre matériau, par exemple la partie mâle de l'accouplement est prévue sur une face d'une lame de bois et la partie femelle sur une face de la lame de matériau stratifié.

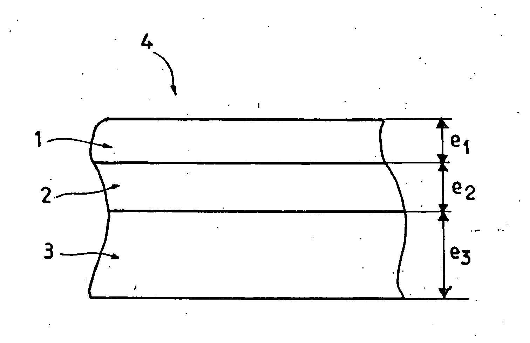

On comprendra mieux l'invention à l'aide de la description ci-après faite en référence à la figure unique annexée qui est une vue en coupe transversale d'un carrelet selon l'invention.

Un carrelet (4) tel que représenté est constitué par deux lames en essence de bois naturel (1, 2) d'épaisseurs (e₁ et e₂), rendues solidaires par collage, et couplées à une lame d'un autre matériau (3).

Avant leur collage entre elles les lames de bois sont préalablement portées à une hygrométrie de 8 % puis elles sont collées par une colle vynilique.

La lame de l'autre matériau (3) ne subit aucune préparation particulière.

L'accouplement de la lame de l'autre matériau (3) sur l'une des faces du couple de lames en bois peut être réalisé par collage.

De façon préférentielle, pour réaliser un accouplement fiable et stable tout en se libérant des exigences qu'impliquerait l'utilisation de colle, on réalise l'accouplement par un dispositif en queue d'aronde obtenu par usinage d'une face de la lame de l'autre matériau (3) pour la partie femelle et par usinage d'une face de l'ensemble bois pour la partie mâle.

A titre d'exemple les lames peuvent présenter les épaisseurs suivantes :
- pour (e₁) et (e₂): de 7 à 20 mm, préférentiellement 19 mm,
- pour (e₃) : de 10 à 35 mm, préférentiellement 30 mm.

Préférentiellement, la lame de l'autre matériau est une lame de stratifié à base de duromère laminé à haute pression et préférentiellement de teinte bois.

A titre d'exemple la lame de stratifié à base de duromère laminé à haute pression peut présenter une épaisseur de 10 mm et les lames de bois une épaisseur totale de 26.5 mm.

Les carrelets et/ou les profilés selon l'invention peuvent être usinés (sciés, découpés...) au moyen d'outils d'usinage bois classiques pour fabriquer tout produit de menuiserie, notamment des menuiseries d'extérieur qui combinent les propriétés techniques et avantages des différents matériaux tout en permettant de placer une face étanche et inaltérable côté extérieur d'un bâtiment, et une face bois côté intérieur.

## Revendications

1. Procédé d'obtention d'un carrelet multiplis composite utilisable en menuiserie, en particulier mais non limitativement pour la réalisation de menuiseries d'extérieur, et composé d'au moins un pli extérieur (3) en stratifié à base de duromère laminé à haute pression, les autres pli(s) (1,2) étant des pli(s) en essence de bois naturel, **caractérisé en ce qu'**on porte avant leur collage entre eux les pli(s) de bois à une hygrométrie de 8 %, puis on les colle entre eux.

2. Procédé selon la revendication 1, **caractérisé en ce que** l'accouplement du matériau en stratifié à base de duromère laminé haute pression sur l'une des faces de l'ensemble de lames en bois peut être réalisé par collage.

3. Procédé selon la revendication 1, **caractérisé en ce qu'**on réalise l'accouplement du matériau stratifié à base de duromère laminé à haute pression par un dispositif en queue d'aronde obtenu par usinage d'une face de la lame dudit matériau pour la partie femelle et par usinage d'une face de l'ensemble bois pour la partie mâle.

4. Carrelet multiplis composite utilisable en menuiserie, en particulier mais non limitativement pour la réalisation de menuiseries d'extérieur, **caractérisé en ce qu'**il est composé d'au moins un pli extérieur en matériau stratifié à base de duromère laminé à haute pression, les autres plis étant des plis en essence de bois naturel, et **en ce qu'**il est obtenu par un procédé selon l'une des revendications 1 à 3, et **en ce que** les plis en essence de bois naturel peuvent présenter une épaisseur (e₁, e₂) de 7 à 20 mm, et le pli extérieur en matériau stratifié une épaisseur (e₃) de 10 à 35 mm.

5. Carrelet selon la revendication 4, **caractérisé en ce qu'**il comporte une couche de colle polyuréthane mono composante pour l'accouplement entre le bois et l'autre matériau.

6. Carrelet selon la revendication 4, **caractérisé en ce qu'**il comporte un moyen d'accouplement en queue d'aronde entre le bois et l'autre matériau.

7. Carrelet selon la revendication 6, **caractérisé en ce que** la partie mâle de l'accouplement est prévue sur une face d'une lame de bois et la partie femelle sur une face de la lame de l'autre matériau.

8. Carrelet selon l'une des revendications 4 à 7, **caractérisé en ce qu'**il comporte au moins deux lames en essence de bois naturel et une lame de l'autre matériau.

9. Produit de menuiserie, par exemple pour la réalisation de menuiseries extérieures, **caractérisé en ce qu'**il est fabriqué par usinage d'un carrelet selon l'une des revendications 4 à 9..

## Claims

1. Method for obtaining a composite multilayer sheet for use in joinery, in particular but not limited to the production of exterior joinery, and comprising at least one outer layer (3) of high pressure laminated duromer, the other layer(s) (1, 2) being essentially layer(s) of natural wood, **characterised in that** before the layer(s) of wood are glued together, they are brought to a hygrometry of 8% and then glued together.

2. Method according to Claim 1, **characterised in that** the attachment of the high pressure laminated duromer to one face of the assembly of sheets of wood may be achieved by gluing.

3. Method according to Claim 1, **characterised in that** the high pressure laminated duromer is attached by a dovetail device obtained by machining one face of the sheet of said material for the female part and by machining one face of the wooden assembly for the male part.

4. Composite multilayer sheet for use in joinery, in particular but not limited to the production of exterior joinery, **characterised in that** it comprises at least one outer layer in high pressure laminated duromer, the other layers being essentially layers of natural wood, and **in that** it is obtained by a method according to any of Claims 1 to 3, and **in that** the layers of essentially natural wood can have a thickness (e1, e2) of 7 to 20 mm, and the outer layer of laminate material a thickness (e3) of 10 to 35 mm.

5. Sheet according to Claim 4, **characterised in that** it comprises a layer of mono-component polyurethane adhesive for the joint between the wood and the other material.

6. Sheet according to Claim 4, **characterised in that** it comprises a means of dovetail jointing between the wood and the other material.

7. Sheet according to Claim 6, **characterised in that** the male part of the joint is provided on one face of a layer of wood and the female part on one face of the layer of the other material.

8. Sheet according to any of Claims 4 to 7, **characterised in that** it comprises at least two layers of essentially natural wood and one layer of the other material.

9. Joinery product, for example for production of exterior joinery, **characterised in that** it is made by machining a sheet according to any of Claims 4 to 8.

## Patentansprüche

1. Verfahren zum Erzielen eines in der Schreinerei verwendbaren Verbundholzprofils, insbesondere aber nicht einschränkend zum Herstellen von externen Schreinereielementen und bestehend aus mindestens einer äußeren Schicht (3) aus Laminat auf der Grundlage von bei hohem Druck laminiertem Duroplast, wobei die andere Schicht(en) (1, 2) aus Naturholzschichten bestehen, **dadurch gekennzeichnet, dass** man die Holzschicht oder -schichten vor ihrem Zusammenkleben auf eine Hygrometrie von 8 % bringt und sie dann zusammenklebt.

2. Verfahren nach Anspruch 1, **dadurch gekennzeichnet, dass** das Koppeln des Werkstoffs aus Laminat auf bei hohem Druck laminiertem Duroplast auf einer der Seiten der Einheit Holzlagen durch Kleben hergestellt werden kann.

3. Verfahren nach Anspruch 1, **dadurch gekennzeichnet, dass** man das Koppeln des laminierten Materials auf der Grundlage von bei hohem Druck laminiertem Duroplast durch eine Schwalbenschwanzvorrichtung ausführt, die durch Bearbeiten einer Seite der Lage des Werkstoffs für den Mutterteil und durch Bearbeiten einer Seite der Holzeinheit für den Vaterteil erzielt wird.

4. Mehrschichtiges Verbundholzprofil, das in der Schreinerei verwendbar ist, insbesondere aber nicht einschränkend zum Herstellen externer Schreinereielemente, **dadurch gekennzeichnet, dass** es aus mindestens einer äußeren Schicht aus Laminat auf der Grundlage von bei hohem Druck laminiertem Duroplast besteht, wobei die anderen Schichten Naturholzschichten sind, und dass es durch ein Verfahren nach einem der Ansprüche 1 bis 3 erzielt wird, und dass die Naturholzschichten eine Stärke (e₁, e₂) von 7 bis 20 mm aufweisen können, und die äußere Laminatschicht eine Stärke (e₃) von 10 bis 35 mm.

5. Verbundholzprofil nach Anspruch 4, **dadurch gekennzeichnet, dass** es eine Schicht Einkomponenten-Polyurethanklebstoff zum Koppeln zwischen dem Holz und dem anderen Werkstoff aufweist.

6. Verbundholzprofil nach Anspruch 4, **dadurch gekennzeichnet, dass** es ein Koppelmittel in Schwalbenschwanz zwischen dem Holz und dem anderen Werkstoff aufweist.

7. Verbundholzprofil nach Anspruch 6, **dadurch gekennzeichnet, dass** der Vaterteil der Kopplung auf einer Seite einer Holzlage und der Mutterteil auf einer Seite der Lage des anderen Werkstoffs vorgesehen ist.

8. Verbundholzprofil nach einem der Ansprüche 4 bis 7, **dadurch gekennzeichnet, dass** es mindestens zwei Naturholzlagen und eine Lage des anderen Werkstoffs aufweist.

9. Schreinereiprodukt, zum Beispiel zum Herstellen externer Schreinereielemente, **dadurch gekennzeichnet, dass** es durch Bearbeiten eines Verbundholzprofils nach einem der Ansprüche 4 bis 9 hergestellt ist.
